# EUROPEAN PATENT SPECIFICATION

(11) **EP 1 961 681 B1**
(45) Date of publication and mention of the grant of the patent: **26.05.2010**
(21) Application number: 08002914.3
(22) Date of filing: 18.02.2008
(51) Int. Cl.: B65G 27/08

(54) **Hooking device for hooking a vibrating conveying channel to a vibration generator and conveyor comprising this hooking device**
Einhakvorrichtung zum Einhaken eines vibrierenden Förderkanals in einen Vibrationsgenerator und Förderer mit dieser Einhakvorrichtung
Dispositif de fixation pour fixer un canal de transport à vibrations à un générateur de vibrations et transporteur comportant ce dispositif de fixation

(30) Priority: 20.02.2007 IT mi20070054 U
(43) Date of publication of application: 27.08.2008
(73) Proprietor: ILAPAK INTERNATIONAL S.A., 6926 Collina d'Oro (CH)
(72) Inventor: Alessandri, Alessandro, 52100 Arezzo AR (IT); Badini, Raul, 52043 Castiglion Fiorentino AR (IT)
(74) Representative: Faraggiana, Vittorio

(56) References cited:
- EP-A- 0 677 460
- US-A1- 2005 126 893

## Description

The present invention refers to a hooking device for hooking a vibrating conveying channel to a vibration generator according to the preamble of claim 1 and, more in general, also to a conveyor comprising this hooking device.

In the prior art making vibrating-channel conveyors is known, which vibrating-channel conveyors comprise a vibration generator fixed to the lower portion of the channel to be made to vibrate. The generator is provided, in general, with two or more elastic strips that hold a support on which the channel is fixed. The support is moved by a suitable actuator of the generator, that pushes the generator in an intermittent manner to make the products advance along the channel. Between one thrust of the actuator and the next, the elastic strips return the support (and the channel) to the departure position, so that the desired vibration is obtained.

The channel has to be fixed stiffly to the support of the vibration generator to transmit the vibrations produced by the generator without disturbances or leakage. Further, fixing must be sufficiently firm to be able to support reliably the considerable and continuous mechanical and vibrational stress.

The channel can, for example, be fixed with a plurality of bolts to the vibrating support.

Known channel fixing systems, however, do not allow the channel to be replaced or removed in a rapid and easy manner. This entails grave losses of time if it is desired to perform maintenance or cleaning of the components of the conveyor.

US-A-2005/0126893 discloses a hooking device according to the preamble of claim 1, wherein the channel is mounted on the vibrating support by releasable fixing means EP-A-0677460 discloses a further releasable hooking device.

The general object of the present invention is to overcome the aforesaid drawbacks by providing a hooking device for hooking the vibrating channel to the vibration generator that enables the channel to be hooked and unhooked in a rapid and easy manner.

A further object of the invention is to provide a hooking device for hooking the channel to the generator that enables solid, stiff and reliable fixing to be obtained, also in the presence of strong and continuous mechanical vibration stress.

In view of this object, it has been decided to make, according to the invention, a hooking device for hooking a vibrating conveying channel to a vibration generator according to the features of claim 1.

In order to make the explanation of the innovative principles of the present invention and the advantages thereof over the prior art clearer, with the help of the attached drawings, a possible embodiment thereof applying such principles will be disclosed below by way of example. In the drawings:
- figure 1 shows a side view of a hooking device according to the present invention,
- figure 2 shows a perspective view of a female coupling element of the hooking device,
- figure 3 shows a perspective view of a male coupling element of the hooking device,
- figure 4 is a perspective view of the male element coupled with the female element.

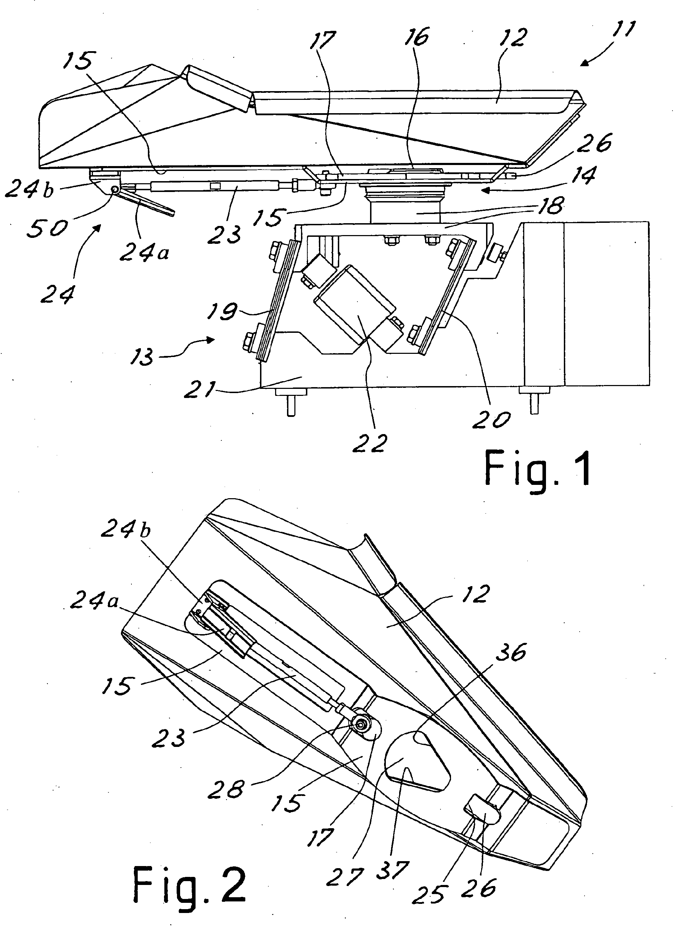

With reference to the figures, in figure 1 there is shown a vibrating-channel conveyor 11 comprising a vibrating conveying channel 12 fixed to a vibration generator 13 by a hooking device 14.

The hooking device 14 comprises a first coupling element 15 fixed to the vibrating channel 12 and a second coupling element 16 fixed to the vibration generator 13, in particular to the vibrating support 18 of the generator 13.

The vibration generator 13, shown schematically in the figure, can be made according to the prior art, for example with a support 18 supported by a pair of elastic strips 19, 20 anchored to a fixed base 21 of the generator. In order to impart the oscillation, there is an actuator 22 that intermittently pushes the support 18. Between one push and the next one the elastic strips 19, 20 return the support 18 to the departure position, thus achieving the desired vibration.

According to the element 15 fixed to the channel is a female element provided with a seat 27 inside which the male element 16 is inserted. In the coupled position, the reciprocal position of the two coupling elements 15, 16 is connected to the coupled position in a direction that is transverse to the direction of the coupling movement.

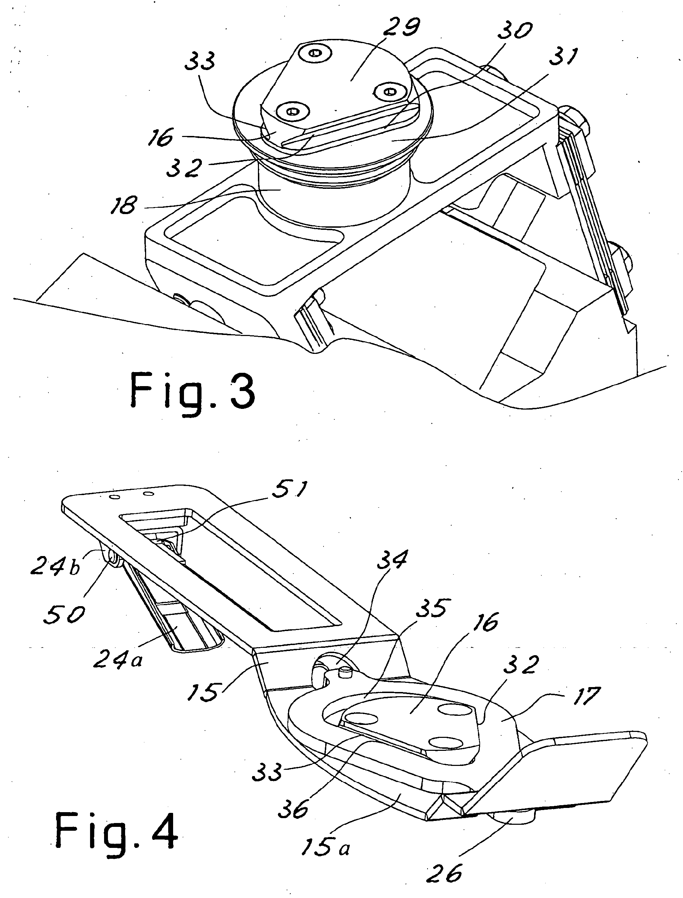

The elements 15, 16 are couplable with one another in an engaging position (also shown in figure 4) on which they rest on one another according to the coupling direction. In particular, the flanges 31 of the male (see fig. 3) rest against the lower surface of the female element 15 when the two elements are coupled.

The elements 15, 16 are couplable with a reciprocal movement that is orthogonal to the bottom of the channel. The coupling seat 27 is advantageously made with a through hole that is traversed by the male element 16. The hole 27 can have a generally triangular shape. A side of the triangle defined by the hole 27 is transverse to the movement direction of the wedge element 17, on the tie rod side 23 facing an opposite side of the male 16 with respect to the wedging seat. This side of the triangle that is transverse to the tie rod 23 can have a concave rounded shape.

The coupling elements 15, 16 have surfaces 15a, 32, 33 that cooperate to form a wedging seat when the elements are in the coupling position.

The hooking device 14 also comprises a wedge element 17 that is transversely movable to the coupling direction between male and female 15, 16.

The wedge element 17 is movable between a position outside the wedging seat, in order not to interfere with the male and female coupling movement 15, 16, and a position wedged in the wedging seat, to achieve the hooking between the two coupling elements.

The device 14 also comprises means 23, 24 for applying a wedging force to the wedge element 17, so as to push the wedge element 17 into the wedging seat and make a firm hook between the vibrating channel 12 and the vibration generator 13.

The wedge element 17, is, advantageously, guided slidably on the first coupling element 15.

The female element 15 comprises a plate fixed to the bottom of the vibrating channel 12, which is spaced from the channel at the hole 27 intended for receiving the male 16 so that the latter protrudes into the space comprised between the plate 15 and the vibrating channel 12.

The wedge element 17 is mounted slidably between said plate 15 and the bottom of the vibrating channel 12, advantageously along a longitudinal direction with respect to the channel 12. The wedge element 17 has a generally annular shape, with a hole 35 inside which, in the hooking position, there is arranged the head 29 of the male coupling element 16.

The hole 35 in the wedge element 17 is shaped so as to correspond almost to the formed hole 27 of the female plate 15, as can be seen by figures 2 and 4. The hole in the wedge element 17 is superimposed on the hole 27 of the female element in the position of disengagement from the wedging seat so as not to interfere with the coupling (and decoupling) movement of the two elements 15, 16.

Advantageously, in order to guide the transverse movement of the wedge element 17, in an oblique portion of the plate 15 there is provided an opening 25 inside which can slide the portion 26 of the wedge 17, which extends longitudinally from the side of the element 17 opposite the tie rod 23 (fig. 2). Possibly, there can also be provided various sliding guiding means between the wedge 17 and the plate 15, for example with pins that are slidable in suitable longitudinal grooves.

The tie rod 23 is anchored on the wedge 17 by known fixing means 28 (for example by a bolt), and is arranged below the plate 15 at a portion of the plate 15 adhering to the bottom of the channel. The tie rod 23 is connected to the wedge 17 through an opening 34 in the plate, as shown in figure 4.

The wedging seat advantageously comprises two portions arranged on opposite sides of one of the coupling elements, in particular on opposite sides of the male element 16 fixed to the vibration generator 13. The two portions of the wedging seat form two grooves arranged generally in a V.

The male coupling element 16 comprises two wedging surfaces 32, 33 on the head 29 thereof, which head 29 is arranged in use in the space between the plate 15 and the vibrating channel 12. The surfaces 32, 33 are on opposite sides of the head 29 and are tilted with respect to the upper surface 15a of the plate near the hole 27. The surfaces 32, 33, which are made advantageously by milling, are suitable for cooperating with the surface 15a of the female plate to form the wedging seat of the wedge element 17.

The coupling elements and the wedge element are made of metal, for example of steel.

The wedge element 17 comprises two edges 36, 37 arranged in a V that engage the two grooves formed by the surfaces 32, 33 and by the surface 15a. Advantageously, the V-shaped edges are arranged symmetrically with respect to a longitudinal direction of the channel, and to the application direction of the force on the wedge element 17.

As shown well in figure 3, the flange 31 of the male coupling element is arranged below the portion 30 shaped in a corresponding manner by the hole 27. When the flange 31 rests against the plate 15, the male and the female cannot move mutually on the plane of the plate 15. When the wedge 17 is pushed into the wedging seat, the flanges 31 are pressed against the plate 15. Advantageously, the flanges 31 protrude on opposite sides of the male 16.

The means for applying a wedging force to the wedge 17 comprises a tie rod 23. The tie rod 23 is dragged by suitable means 24 that can be advantageously anchored with the part thereof fixed to the plate 15.

According to the embodiment shown in the figures, the traction means 24 is made with a toggle mechanism comprising a lever 24a hinged with a hinge 50 to a support 24b anchored on the lower face of the plate 15. An end 51 of the tie rod 23 is fixed to the lever 24a so that the latter is snappably movable between an unhooking position distanced from the channel 12 and a hooking position near to the channel 12 in which the tie rod 23 is dragged.

It should be noted that for the same vibrating channel several hooking devices of the type disclosed previously could be provided arranged along the vibrating channel. Advantageously, the wedges of each hooking device could be connected to the same tie rod, so that it is sufficient to act on a single dragging element to achieve the unhooking and the hooking of the channel from and to the vibration generator.

The male element 16 can be fixed to the end of a portion 18 of the vibrating support of the generator by known fixing means, for example by screwing.

At this point it is clear how the objects of the present invention have been achieved.

In particular a hooking device is provided that enables the vibrating channel to be fixed to the vibration generator is a firm and reliable manner.

The fixing is sufficiently stiff to have correct transmission of the vibrations without leakage or disturbances, enabling optimal advancing of the products conveyed on the vibrating channel to be obtained.

Further, the operations of hooking and unhooking the channel are made easy and rapid, it being sufficient to drag the wedge to ensure the firm and safe fixing thereof. This enables cleaning and maintenance of the components of the conveyor to be facilitated.

Naturally, the description made above of an embodiment applying the innovative principles of the present invention is given by way of example of such innovative principles and must not therefore be taken to limit the scope of the appended claims.

For example, the vibration generator could be of any known type and not necessarily be of the type disclosed above.

## Claims

1. Hooking device for hooking a vibrating conveying channel (12) to a vibration generator (13) comprising a first coupling element (15) fixed to the vibrating channel and a second coupling element (16) fixed to the vibration generator, said first and second elements being couplable with one another with a reciprocal movement along a coupling direction, said first and second elements having surfaces (15a, 32, 33) that join to form a wedging seat when the elements are in a coupling position, the device also comprising a wedge element (17) that is transversely movable to said coupling direction between a position outside the wedging seat and a wedged position in said wedging seat, there being means (23, 24) for applying a wedging force to the wedge element (17) to push the wedge element (17) into the wedging seat and for achieving hooking between the vibrating channel and the vibration generator, wherein the two coupling elements (15, 16) make a male/female coupling, the female element (15) comprising a coupling seat (27) shaped so as to receive a corresponding portion (30) of the male coupling element (16), **characterised in that** the female coupling element is said first element fixed to the vibrating channel (12) and comprises a female plate (15) fixed on the bottom of the vibrating channel (12), said plate being distanced from the channel at a hole (27) intended to make said coupling seat and to receive the second male coupling element (16) so that the latter protrudes into the space comprised between the plate and the vibrating channel.

2. Device according to claim 1, **characterised in that** said wedging seat comprises two portions arranged on opposite sides of the male coupling element (16).

3. Device according to claim 2, **characterised in that** said two portions of the wedging seat form two grooves arranged generally in a V.

4. Device according to claim 1, **characterised in that** said wedge element (17) comprises a generally annular element that grasps the male coupling element (16) when the wedge element is in the wedging position.

5. Device according to claim 1, **characterised in that** said coupling seat (27) has a generally triangular shape with a side that is generally transverse to the movement direction of the wedge element (17) on a side of the male opposite the wedging seat.

6. Device according to claim 1, **characterised in that** the second male coupling element (16) comprises wedging surfaces (32, 33) on the head (29) thereof, arranged in use in the space between the plate (15) and the vibrating channel (12), said surfaces (32, 33) being suitable for cooperating with the upper surface (15a) of the female plate to form said wedging seat.

7. Device according to claim 1, **characterised in that** said second male coupling element (16) comprises a resting flange (31) suitable for contacting the lower surface of the female plate (15) on the side opposite the vibrating channel.

8. Device according to claims 6 and 7, **characterised in that** between said head (29) and said resting surface (31) the second male coupling element (16) comprises a shaped portion (30) in a manner corresponding to the hole (27) obtained in the female plate (15).

9. Device according to claim 1, **characterised in that** the wedge element (17) is mounted slidably between said plate (15) and the bottom of the vibrating channel (12).

10. Device according to claim 1, **characterised in that** the wedging direction of the wedge element (17) is longitudinal to the vibrating channel (12).

11. Device according to claim 1, **characterised in that** the first coupling element (15) is suitable for being fixed on the bottom of the vibrating channel, the coupling direction being transverse to the bottom of the channel.

12. Device according to claim 1, **characterised in that** the wedge element (17) is guided in a slidable manner on the first element (15) fixed to the vibrating channel (12).

13. Device according to claim 1, **characterised in that** said means for applying a wedging force comprises a tie rod (23) anchored to the wedge element.

14. Device according to claim 1, **characterised in that** said means for applying a force to the wedge element (17) comprises a toggle mechanism (24) provided with a lever (24a) that is movable snappably between an unhooking position and a hooking position in which the wedging force is applied.

15. Device according to claim 1, **characterised in that** said means for applying a wedging force to the wedge element is anchored with a part (24) fixed to the coupling element (15) that is integral with the vibrating channel (12).

16. Device according to claim 1, **characterised in that** the female element is plate-shaped.

17. Device according to claim 1, **characterised in that** the wedge element is plate-shaped.

18. Vibrating-channel conveyor comprising a vibration generator and a hooking device between the channel and the generator according to any preceding claim.

## Patentansprüche

1. Einhakvorrichtung zum Einhaken eines vibrierenden Förderkanals (12) in einen Vibrationsgenerator (13) umfassend ein erstes Verbindungselement (15), das an dem vibrierenden Kanal befestigt ist und ein zweites Verbindungselement (16), das an dem Vibrationsgenerator befestigt ist, wobei das erste und das zweite Element durch eine gegenseitigen Bewegung entlang einer Verbindungsrichtung miteinander verbindbar sind, wobei das erste und das zweite Element Oberflächen (15a, 32, 33) aufweisen, die miteinander eingreifen, um einen Keilsitz zu bilden, wenn die Elemente in einer Verbindungsposition sind, wobei die Vorrichtung weiterhin ein Keilelement (17) umfasst, das zu der Verbindungsrichtung transversal zwischen einer Position außerhalb des Keilsitzes und einer Keilposition in dem Keilsitz bewegbar ist, wobei Mittel (23, 24) vorgesehen sind, um eine Keilkraft auf das Keilelement (17) auszuüben, um das Keilelement (17) in den Keilsitz zu drücken und um ein Einhaken zwischen dem vibrierenden Kanal und dem Vibrationsgenerator zu erreichen, wobei die zwei Verbindungselemente (15, 16) eine Einsteckverbindung herstellen, wobei das aufnehmende Element (15) einen Verbindungssitz (27) umfasst, der so geformt ist, dass ein korrespondierender Bereich (30) des hervorstehenden Verbindungselementes (16) aufgenommen werden kann, **dadurch gekennzeichnet, dass** das aufnehmende Verbindungselement das erste Element darstellt, das mit dem vibrierenden Kanal (12) verbunden ist und eine aufnehmende Platte (15) umfasst, die an der Unterseite des vibrierenden Kanals (12) befestigt ist, wobei die Platte von dem Kanal an einer Öffnung (27) beabstandet ist, um den Verbindungssitz zu bilden und das zweite hervorstehende Verbindungselement (16) aufzunehmen, so dass das letztgenannte in den Raum, der zwischen der Platte und dem vibrierenden Kanal besteht, hineinragt.

2. Einhakvorrichtung nach Anspruch 1, **dadurch gekennzeichnet, dass** der Keilsitz zwei Bereiche umfasst, die an gegenüberliegenden Seiten des hervorstehende Verbindungselementes (16) angeordnet sind.

3. Einhakvorrichtung nach Anspruch 2, **dadurch gekennzeichnet, dass** die zwei Bereiche des Keilsitzes zwei Rillen bilden, die im Wesentlichen als ein V ausgerichtet sind.

4. Einhakvorrichtung nach Anspruch 1, **dadurch gekennzeichnet, dass** das Keilelement (17) ein im Wesentlichen kreisförmiges Element umfasst, das das hervorstehende Verbindungselement (16) umfasst, wenn das Keilelement sich in der Keilposition befindet.

5. Einhakvorrichtung nach Anspruch 1, **dadurch gekennzeichnet, dass** der Verbindungssitz (27) eine im Wesentlichen dreieckige Form aufweist mit einer Seite, die im Wesentlichen transversal zu der Bewegungsrichtung des Keilelementes (17) auf einer Seite des Vorstandes gegenüber dem Keilsitz liegt.

6. Einhakvorrichtung nach Anspruch 1, **dadurch gekennzeichnet, dass** das zweite hervorstehende Verbindungselement (16) an dessen Kopf (29) Keiloberflächen (32, 33) umfasst, die beim Einsatz in dem Raum zwischen der Platte (15) und dem vibrierenden Kanal (12) angeordnet ist, wobei die Oberflächen (32, 33) geeignet sind, um mit der oberen Oberfläche (15a) der aufnehmenden Platte zusammenzuarbeiten, um den Keilsitz zu bilden.

7. Einhakvorrichtung nach Anspruch 1, **dadurch gekennzeichnet, dass** das zweite hervorstehende Verbindungselement (16) einen Ruheflansch (31) umfasst, der geeignet ist, um die untere Oberfläche der aufnehmenden Platte (15) an der Seite gegenüber dem vibrierenden Kanal zu berühren.

8. Einhakvorrichtung nach einem der Ansprüche 6 oder 7, **dadurch gekennzeichnet, dass** das zweite hervorstehende Verbindungselement (16) zwischen dem Kopf (29) und der Ruheoberfläche (31) einen geformtem Bereich (30) umfasst der Art, die mit der Öffnung (27), die in der aufnehmenden Platte (15) erhalten wird, korrespondiert.

9. Einhakvorrichtung nach Anspruch 1, **dadurch gekennzeichnet, dass** das Keilelement (17) verschiebbar zwischen der Platte (15) und der Unterseite des vibrierenden Kanals (12) angebracht ist.

10. Einhakvorrichtung nach Anspruch 1, **dadurch gekennzeichnet, dass** die Keilrichtung des Keilelementes (17) längs zu dem vibrierenden Kanal (12) liegt.

11. Einhakvorrichtung nach Anspruch 1, **dadurch gekennzeichnet, dass** das erste Verbindungselement (15) geeignet ist, um an der Unterseite des vibrierenden Kanals befestigt zu werden, wobei die Verbindungsrichtung transversal zu der Unterseite des Kanals liegt.

12. Einhakvorrichtung nach Anspruch 1, **dadurch gekennzeichnet, dass** das Keilelement (17) verschiebbar an dem ersten Element (15) geführt ist, das an dem vibrierenden Kanal (12) befestigt ist.

13. Einhakvorrichtung nach Anspruch 1, **dadurch gekennzeichnet, dass** die Mittel zur Aufbringung der Keilkraft eine Verbindungsstange (23) umfassen, die an dem Keilelement verankert ist.

14. Einhakvorrichtung nach Anspruch 1, **dadurch gekennzeichnet, dass** die Mittel zum Aufbringen einer Kraft auf das Keilelement (17) einen Umschaltmechanismus (24) umfassen, der mit einem Hebel (24a) ausgestattet ist, der einrastbar zwischen einer nicht-einhakenden Position und einer einhakenden Position, in der die Keilkraft aufgebracht wird, bewegbar ist.

15. Einhakvorrichtung nach Anspruch 1, **dadurch gekennzeichnet, dass** die Mittel zum Aufbringen der Keilkraft auf das Keilelement mit einem Teil (24) verankert ist, das mit dem Verbindungselement (15) verbunden ist, das mit dem vibrierenden Kanal (12) integral ausgestaltet ist.

16. Einhakvorrichtung nach Anspruch 1, **dadurch gekennzeichnet, dass** das aufnehmende Element plattenförmig ist.

17. Einhakvorrichtung nach Anspruch 1, **dadurch gekennzeichnet, dass** das Keilelement plattenförmig ist.

18. Förderer für vibrierenden Kanal umfassend einen Vibrationsgenerator und eine Einhakvorrichtung zwischen dem Kanal und dem Generator gemäß einem der vorstehenden Ansprüche.

## Revendications

1. Dispositif d'accrochage pour accrocher un canal de transport vibrant (12) à un générateur de vibrations (13) comprenant un premier élément d'accouplement (15) fixé au canal vibrant et un deuxième élément d'accouplement (16) fixé au générateur de vibrations, lesdits premier et deuxième éléments d'accouplement pouvant être couplés l'un à l'autre en un mouvement réciproque le long d'une direction de couplage, lesdits premier et deuxième éléments ayant des surfaces (15a, 32, 33) qui s'assemblent pour former un siège de calage lorsque les éléments sont dans une position d'accouplement, le dispositif comprend également un élément formant cale (17) qui peut être déplacé transversalement dans ladite direction d'accouplement entre une position à l'extérieur du siège de calage et une position calée dans ledit siège de calage, comprenant des moyens (23, 24) pour appliquer une force de calage sur l'élément formant cale (17) pour pousser l'élément formant cale (17) dans le siège de calage pour obtenir un accrochage entre le canal vibrant et le générateur de vibrations, dans lequel les deux éléments d'accouplement (15, 16) créent un accouplement mâle / femelle, l'élément femelle (15) comprenant un siège d'accouplement (27) ayant une forme lui permettant de recevoir une portion correspondante (30) de l'élément d'accouplement mâle (16), **caractérisé en ce que** l'élément d'accouplement femelle est ledit premier élément fixé au canal vibrant (12) et comprend une plaque femelle (15) fixée au fond du canal vibrant (12), ladite plaque étant distante du canal dans un trou (27) conçu pour créer ledit siège d'accouplement et pour recevoir le deuxième élément d'accouplement mâle (16) de façon que ce dernier fasse saillie dans l'espace compris entre la plaque et le canal vibrant.

2. Dispositif selon la revendication 1, **caractérisé en ce que** ledit siège de calage comprend deux portions disposées sur des côtés opposés de l'élément d'accouplement mâle (16).

3. Dispositif selon la revendication 2, **caractérisé en ce que** lesdites deux portions du siège de calage forment deux rainures disposées généralement en V.

4. Dispositif selon la revendication 1, **caractérisé en ce que** ledit élément formant cale (17) comprend un élément généralement annulaire qui saisit l'élément d'accouplement mâle (16) lorsque l'élément formant cale est dans la position de calage.

5. Dispositif selon la revendication 1, **caractérisé en ce que** ledit siège d'accouplement (27) a une forme généralement triangulaire avec un côté qui est généralement transversal à la direction de déplacement de l'élément formant cale (17) sur un côté de l'élément mâle opposé au siège de calage.

6. Dispositif selon la revendication 1, **caractérisé en ce que** le deuxième élément d'accouplement mâle (16) comprend des surfaces de calage (32, 33) sur sa tête (29), disposées pendant l'utilisation dans l'espace entre la plaque (15) et le canal vibrant (12), lesdites surfaces (32, 33) étant adaptées pour coopérer avec la surface supérieure (15a) de la plaque femelle pour former ledit siège de calage.

7. Dispositif selon la revendication 1, **caractérisé en ce que** ledit deuxième élément d'accouplement mâle (16) comprend un rebord de repos (31) adapté pour venir en contact avec la surface inférieure de la plaque femelle (15) sur le côté opposé au canal vibrant.

8. Dispositif selon les revendications 6 et 7, **caractérisé en ce que**, entre ladite tête (29) et ladite surface de repos (31), le deuxième élément d'accouplement mâle (16) comprend une portion formée (30) d'une manière correspondant au trou (27) obtenu dans la plaque femelle (15).

9. Dispositif selon la revendication 1, **caractérisé en ce que** l'élément formant cale (17) est monté de manière coulissante entre ladite plaque (15) et le fond du canal vibrant (12).

10. Dispositif selon la revendication 1, **caractérisé en ce que** la direction de calage de l'élément formant cale (17) est longitudinale au canal vibrant (12).

11. Dispositif selon la revendication 1, **caractérisé en ce que** le premier élément d'accouplement (15) convient pour être fixé sur le fond du canal vibrant, la direction d'accouplement étant transversale au fond du canal.

12. Dispositif selon la revendication 1, **caractérisé en ce que** l'élément formant cale (17) est guidé d'une manière coulissante sur le premier élément (15) fixé au canal vibrant (12).

13. Dispositif selon la revendication 1, **caractérisé en ce que** lesdits moyens pour appliquer une force de calage comprennent un tirant (23) ancré sur l'élément formant cale.

14. Dispositif selon la revendication 1, **caractérisé en ce que** lesdits moyens pour appliquer une force sur l'élément formant cale (17) comprennent un mécanisme articulé (24) muni d'un levier (24a) qui peut être déplacé par un ressort entre une position de décrochage et une position d'accrochage dans laquelle la force de calage est appliquée.

15. Dispositif selon la revendication 1, **caractérisé en ce que** lesdits moyens pour appliquer une force de calage sur l'élément formant cale sont ancrés avec une partie (24) fixée sur l'élément d'accouplement (15) qui fait partie intégrante du canal vibrant (12).

16. Dispositif selon la revendication 1, **caractérisé en ce que** l'élément femelle a la forme d'une plaque.

17. Dispositif selon la revendication 1, **caractérisé en ce que** l'élément formant cale a la forme d'une plaque.

18. Transporteur à canal vibrant comprenant un générateur de vibrations et un dispositif d'accrochage entre le canal et le générateur selon l'une quelconque des revendications précédentes.
